# EUROPEAN PATENT APPLICATION

(11) **EP 3 919 819 A1**
(43) Date of publication of application: **08.12.2021**
(21) Application number: 20177677.0
(22) Date of filing: 01.06.2020
(51) Int. Cl.: F24C 15/16, A47J 37/06

(54) **TRAY FOR COOKING FOOD WITH BARBECUE EFFECT IN A CONVECTION OVEN**

(71) Applicant: Bonferraro S.p.A., 37060 Bonferraro (VR) (IT)
(72) Inventor: ANDREATTA, Antonio, 33082 Azzano Decimo PN (IT); BICEGO, Luca, 37060 Bonferraro di Sorgà VR (IT); GASTALDELLI, Lucio, 46037 Roncoferraro MN (IT); LOCATELLI, Andrea, 37134 Verona VR (IT); RIGHETTI, Marco, 46032 Castelbelforte MN (IT); TOSI, Mauro, 37051 Bovolone VR (IT)
(74) Representative: Concone, Emanuele

(57) **Abstract**

Cooking tray comprising a rectangular perimeter frame (1) that carries a row of parallel, spaced tubes (2) that form a support surface for the food to be cooked, so as to give the food cooked in a convection oven the typical grill groove as if it were cooked on a barbecue.

## Description

The present invention concerns a tray for cooking foods such as meat, fish, vegetables, etc. that are typically cooked on the grill of a barbecue, and in particular a tray configured to be used in a convection oven. In the following, we will make specific reference to an electric convection oven, but it is clear that what is being said can be applied to other types of oven (e.g. gas ovens) as long as they are convection ovens.

It is known that present ovens, especially professional ovens, provide various types of cooking depending on the type of food to be cooked and the effect to be given to the food (e.g. browning, grilling, etc.), to which corresponds the use of different trays and grills. Since ovens are used instead of other conventional cooking appliances such as cookware or grills on barbecues, in addition to the cooking performance, an attempt is made to give the food the traditional effect that can be achieved with such conventional appliances, e.g. the typical grooving of the grill in the case of food cooked on a barbecue.

The success of cooking depends on how the food is invested in a global and uniform way by the flows of hot air coming from the blowing and heating system of the oven, as well as the temperature of the food support surface, which must be very hot to give the grooved effect of the product made on the grill.

The object of the present invention is therefore to provide a cooking tray that is able to expose the food with as much surface area as possible to the flow of hot air and at the same time have a support surface that heats up very quickly. This object is achieved by means of a cooking tray having a perimetrically framed conformation with the food support surface consisting of a row of parallel, spaced tubes, preferably with a regular pitch.

A first important advantage of this tray is to considerably increase the heating speed of the food support surface thanks to the forced air flow that is generated inside the tubes, in order to obtain in a very short time the required grooving on the food and at the same time keep the temperature constant thanks to the passage of hot air through the tubes.

A second considerable advantage of this tray is that the cooking is faster and more uniform, with a better appearance of the food and a saving of time and energy thanks to the better circulation of hot air.

A further significant advantage of this tray is its structural simplicity, which makes it economical to produce, robust and easily adaptable to any shape or type of oven.

Further advantages and characteristics of the tray according to the present invention will be evident to those skilled in the art from the following detailed description of an embodiment thereof with reference to the annexed drawings, in which:
Fig.1 is a front perspective view;
Fig.2 is a rear perspective view;
Fig.3 is a vertical transverse cross-sectional view of the tray in Fig.2;
Fig.4 is a horizontal transverse cross-sectional view of the tray of Fig.2;
Fig.5 is a front perspective view of an electric convection oven including a tray according to the present invention; and
Fig.6 is a front view of the oven of Fig.5.

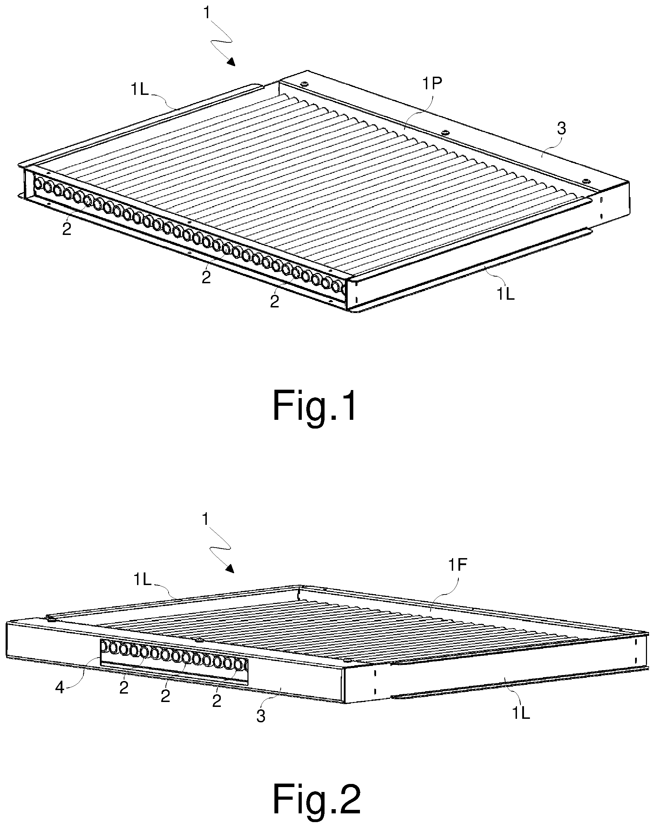

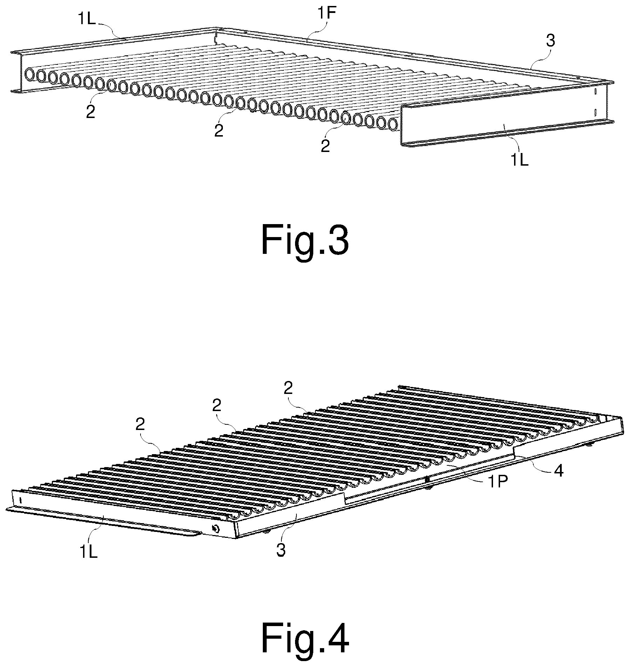

Figures 1-4 show an exemplary embodiment of a tray according to the present invention consisting of a rectangular perimeter frame 1 carrying a row of parallel tubes 2, all identical and spaced with regular pitch, which form the food support surface. Frame 1 consists of two lateral sides 1L, parallel to tubes 2, connected by a front crossbar 1F and a rear crossbar 1P to which tubes 2 are fixed at their end portions.

These four elements 1L, 1F, 1P forming frame 1 are preferably simple C-beams, i.e. a section with a vertical web and two horizontal flanges extending on one side from the ends of said vertical web. These C-beams are connected with their concavity facing outwards, and the two crossbars 1F and 1P have holes along the vertical web for fixing tubes 2, which protrude slightly from the web but preferably do not protrude from the upper and lower flanges of the C-beam.

In order to facilitate the conveying of air through tubes 2 by the suction fan of the convection oven in which the tray is inserted, said fan being typically located in the centre of the rear wall of the cooking chamber, it is preferable that the tray also includes a rear cover 3 which forms a cavity with the rear crossbar 1P and is provided with a central vertical opening 4 of width substantially corresponding to the diameter of the fan.

In practice, the rear cover 3 consists preferably of an additional C-beam mounted on the flanges of the rear crossbar 1P with the concavity facing it so as to form the cavity. The web of said C-beam is centrally provided with opening 4 over its entire height, so that the air coming out of tubes 2 located externally with respect to opening 4 is conveyed by cover 3 towards the fan suction area.

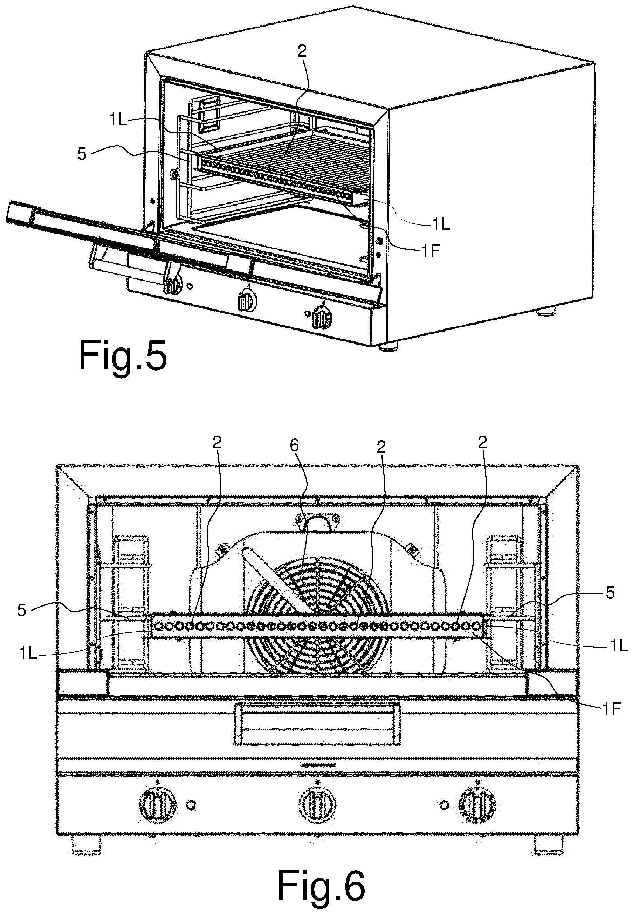

Figures 5 and 6 show how this advantageous structure of the tray allows it to be easily inserted into a convection oven, thanks to sides 1L whose upper flanges rest on the side support structures 5 of the oven, while the central opening 4 is arranged in correspondence with the suction fan 6.

In addition, it should be noted that the above-described tray is symmetrical with respect to a rotation of 180° around a horizontal longitudinal axis, i.e. an axis parallel to tubes 2, whereby it is not possible to define an upper face and a lower face since both faces have the same shape. This is advantageous, because if one face becomes damaged or too dirty it is possible to continue using the tray on the other face before replacing or cleaning it.

It is clear that the embodiment of the tray according to the invention described and illustrated above is only an example that is subject to numerous variations, in particular with regard to the diameter and pitch of tubes 2, the material with which they are made (aluminium, coated aluminium, steel, etc.), which may also be different from that of frame 1, and the shape of the elements that make up frame 1.

For example, it would be possible to make a tray with tubes 2 of different pitch and/or diameter in a part of the food support surface, so as to obtain different grooving effects depending on the area where the food is cooked. In addition, the lateral sides 1L could have a different shape from that of crossbars 1F, 1P for particular construction requirements or for coupling with the tray support structures inside the oven.

## Claims

1. Cooking tray **characterized in that** it includes a rectangular perimeter frame (1) carrying a row of parallel, spaced tubes (2) that form a support surface for the food to be cooked, said frame (1) being formed by two lateral sides (1L), parallel to said tubes (2), connected by a front crossbar (1F) and a rear crossbar (1P) to which the tubes (2) are fixed at their end portions.

2. Cooking tray according to claim 1, **characterized in that** the lateral sides (1L) and the crossbars (1F, 1P) consist of C-beams connected with their concavity facing outwards.

3. Cooking tray according to claim 2, **characterized in that** the crossbars (1F, 1P) have holes along their vertical web for fixing the tubes (2), which protrude slightly from the web but preferably do not protrude from the upper and lower flanges of the C-beam.

4. Cooking tray according to any of the previous claims, **characterized in that** it also includes a rear cover (3) arranged on the rear crossbar (1P) so as to form a cavity with it, said rear cover (3) being centrally provided with a vertical opening (4) so that the air coming out of the tubes (2) arranged externally with respect to said opening (4) is conveyed by the cover (3) towards the opening (4).

5. Cooking tray according to claim 2 and 4, **characterized in that** the rear cover (3) consists of a C-beam mounted on the flanges of the rear crossbar (1P) with the concavity facing it, the web of said C-beam being centrally provided with the opening (4) over its entire height.

6. Cooking tray according to any of the previous claims, **characterized in that** the tubes (2) all have the same diameter and/or are arranged with constant pitch.

7. Cooking tray according to any of the previous claims, **characterized in that** its structure is symmetrical with respect to a rotation of 180° around a horizontal longitudinal axis.

8. A convection cooking oven comprising a suction fan (6) placed in the centre of the rear wall of its cooking chamber, **characterized in that** it also includes a tray according to claim 4 or 5 whose central opening (4) has a width substantially corresponding to the diameter of said fan (6).
